# EUROPÄISCHE PATENTSCHRIFT

(11) **EP 2 005 556 B1**
(45) Veröffentlichungstag und Bekanntmachung des Hinweises auf die Patenterteilung: **12.04.2017**
(21) Anmeldenummer: 07704408.9
(22) Anmeldetag: 07.02.2007
(51) Int. Cl.: H02K 5/14, H02K 5/167

(54) **KUNSTSTOFFELEMENT**
PLASTIC ELEMENT
ELEMENT EN MATIERE SYNTHETIQUE

(30) Priorität: 30.03.2006 DE 102006014762
(43) Veröffentlichungstag der Anmeldung: 24.12.2008
(73) Patentinhaber: Robert Bosch GmbH, 70442 Stuttgart (DE)
(72) Erfinder: SCHROEDER, Patrick, 77815 Buehl (DE); BOHR, Peter, 76137 Karlsruhe (DE)
(86) Internationale Anmeldenummer: PCT/EP2007/051150
(87) Internationale Veröffentlichungsnummer: WO 2007/113029

(56) Entgegenhaltungen:
- DE-A1- 10 223 529
- FR-A1- 2 723 481
- GB-A- 1 241 395
- US-A- 5 818 142

## Beschreibung

### Stand der Technik

Die Erfindung betrifft ein Kunststoffelement gemäß dem Oberbegriff des Anspruchs 1.

Ein derartiges Kunststoffelement wird in elektrischen Antrieben, insbesondere in Fahrzeugen, vorzugsweise in elektrischen Fensterhebeantrieben, eingesetzt, wie dies beispielsweise in der DE 100 06 350 A1 gezeigt ist. Das Kunststoffelement hat mehrere Funktionen. Es bildet einen Lagersitz zur drehfesten Aufnahme eines Wellenlagers, insbesondere eines Kalottenlagers, für eine drehfest mit dem Rotor eines Gleichstromelektromotors verbundene Antriebswelle. Zusätzlich beinhaltet das Kunststoffelement mindestens zwei diametral gegenüberliegende, orthogonal auf einen Wellendurchgangskanal für die Antriebswelle zulaufende Kommutatorbürstenschächte. Diese dienen zur Aufnahme von Kommutatorbürsten oder Stromwendebürsten, auch Kohlebürsten genannt, die einander gegenüberliegend radial an einem auf der Antriebswelle sitzenden Kommutator anliegen. Die Kommutatorbürsten sind innerhalb der Kommutatorbürstenschächte verschieblich gelagert und mit Gleichstrom bestromt. Die Kommutatorbürsten dienen zur Bestromung der Rotorwicklung.

Bei dem bekannten Kunststoffelement sind die Kommutatorbürstenschächte unmittelbar durch zwei parallele Stützarme zur Halterung des Lagersitzes für das Wellenlager hindurch geführt. Es besteht das Problem, dass Schwingungen, insbesondere im akustischen, hörbaren Bereich von den an der Antriebswelle bzw. dem Kommutator anliegenden Kommutatorbürsten unmittelbar über die Stützarme des Lagersitzes an das Wellenlager und von dort aus an das an dem Wellenlager anliegende Getriebegehäuse des elektrischen Antriebs geleitet werden. Das Getriebegehäuse bildet einen Resonanzkörper für die von den Kommutatorbürsten abgestrahlten Schwingungen, was zu einer unerwünschten Geräuschentwicklung führt.

Mit der US-A-5818142 ist ein Elektromotor mit einem Bürstenhalter bekannt geworden, auf dem Bürstenschächte für Kohlebürsten angeordnet sind. Zwischen den Bürstenschächten sind bogenförmige Halteelemente auf dem Bürstenhalter angeordnet, die eine Aufnahme für ein Lager der Ankenrvelle bilden.

Die GB-A-1241395 zeigt einen Elektromotor mit einem Rotor und einem Stator, an dem gegenüberliegend jeweils Lagerschilde angeschraubt sind. In die Lagerschilde ist eine zentrale Aussparung ausgeformt, in die ein Kalottenlager der Ankerwelle aufgenommen werden kann. Dabei sind zwischen den Anschraubpunkten des Lagerschilds in Bürstenköcher aufgenommene Kohlenbürsten angeordnet.

### Offenbarung der Erfindung

### Technische Aufgabe

Der Erfindung liegt die Aufgabe zugrunde, ein verbessertes Kunststoffelement vorzuschlagen, mit dem die Geräuschentwicklung elektrischer Antriebe reduzierbar ist.

### Technische Lösung

Diese Aufgabe wird mit den Merkmalen des Anspruchs 1 gelöst. Erfindungsgemäß ist es von besonderem Vorteil, wenn die Seitenflächen der Kommutatorbürstenschächte mit quadratischen Querschnitt jeweils in einem Winkel von 45° zu einer zur Oberseite der Grundplatte parallel verlaufenden Ebene angeordnet sind. Hierdurch kann die schwingungstechnische Entkopplung zwischen Lagersitz und Kommutatorbürstenschächten weiter verbessert werden.

Vorteilhafte Weiterbildungen der Erfindung sind in den Unteransprüchen angegeben.

Der Erfindung liegt der Gedanke zugrunde, den mindestens einen Stützarm zur Halterung des Lagersitzes für das Wellenlager mit seitlichem Abstand zu den Kommutatorbürstenschächte in die Grundplatte einmünden zu lassen. Der Kontaktbereich zwischen dem Stützarm und Grundplatte liegt also vollständig seitlich versetzt von den Kommutatorbürstenschächten und nicht wie im Stand der Technik unmittelbar oberhalb von diesen. Dabei ist es grundsätzlich gleichgültig, ob der Kontaktbereich des Stützarms mit Abstand neben den Kommutatorbürstenschächten angeordnet ist oder ob der Stützarm mit seitlichem Abstand oberhalb oder mit seitlichen Abstand unterhalb der Kommutatorbürstenschächte mit der Grundplatte verbunden ist. Es kommt primär lediglich auf den seitlichen Abstand des gesamten Kontaktbereichs zu den Kommutatorbürstenschächten an. Durch die erfindungsgemäße Anordnung des mindestens einen Stützarms werden die

Kommutatorbürstenschächte und der Lagersitz schwingungstechnisch entkoppelt. Durch diese Entkopplung wird die Übertragung von Schwingungen der Kommutatorbürsten auf den Lagersitz und damit auf das Getriebegehäuse reduziert, wodurch wiederum die Geräuschemission erheblich verringert wird.

Bevorzugt verlaufen die Kommutatorbürstenschächte unmittelbar aufeinander zu, haben also eine gemeinsame Längsmittelachse, die zusammen mit der Längsmittelachse des Wellendurchgangskanals eine gemeinsame Mittelebene aufspannt. In diesem Fall ist die Verbindungsstelle bzw. der Kontaktbereich zwischen dem mindestens einen Stützarm und der Grundplatte mit Abstand zu einer Außenebene angeordnet, die zu der genannten Mittelebene parallel verläuft. Die Außenebene verläuft durch den am weitesten seitlich außen liegenden Bereich der Kommutatorbürstenschächte, nimmt also die äußerste Längsachse der Kommutatorbürstenschächte, welche parallel zu der gemeinsamen Längsmittelachse der Kommutatorbürstenschächte verläuft, auf. Je weiter seitlich der Stützarm von den Kommutatorbürstenschächten entfernt mit der Grundplatte verbunden ist, desto besser ist die schwingungstechnische Entkopplung zwischen dem Lagersitz und den Kommutatorbürstenschächten.

Bevorzugt erfolgt die Anordnung des oder der Stützarme asymmetrisch zu der gemeinsamen Mittelebene, insbesondere in der Art, dass lediglich auf einer Seite der Mittelebene Stützarme für den Lagersitz vorgesehen sind.

Es hat sich als vorteilhaft erwiesen, als Lagersitz vier biegeelastische Arme vorzusehen, die das Lager klemmend aufnehmen. Die Arme sind bevorzugt in der Art einer Greifhand angeordnet und biegen beim Einführen des Wellenlagers elastisch nach außen.

Gemäß einer bevorzugten Ausführungsform sind jeweils zwei Arme zu einem U-förmigen Element zusammengefasst, wobei die beiden U-förmigen Elemente bevorzugt symmetrisch zu einer orthogonal zu der gemeinsamen Mittelebene verlaufenden Ebene angeordnet sind. Auf jeder Seite der Mittelebene befindet sich bevorzugt jeweils ein Arm eines U-förmigen Elements.

An jedem U-förmigen Element ist in Weiterbildung der Erfindung ein Stützarm vorgesehen, wobei zur Erhöhung der Stabilität die beiden Stützarme über eine mit Abstand zur Grundplatte angeordnete Verbindungsbrücke miteinander verbunden werden können. Es ist vorteilhaft, die Stützarme asymmetrisch zur Mittelebene anzuordnen, insbesondere in der Art, dass beide Stützarme auf einer Seite der Mittelebene und in Längsrichtung der Kommutatorbürstenschächte zueinander beabstandet angeordnet sind. Durch die asymmetrische Anordnung in Bezug auf die Mittelebene erhält man mehr Bauraum, der beispielsweise für die Anordnung elektronischer Bauteile genutzt werden kann.

Um den Stützarmen eine weitere Funktionalität zukommen zu lassen, ist es von Vorteil, dass die Stützarme einen im Wesentlichen L-förmigen Querschnitt aufweisen, wobei bevorzugt jeweils ein Schenkel parallel zu den Kommutatorbürstenschächten verläuft und der jeweils andere Schenkel in Richtung von den Kommutatorbürstenschächten weg weist. Die beiden Stützarme bilden so die Eckkanten eines U-förmigen Gebildes zur Aufnahme eines elektronischen Bauteils, insbesondere eines Thermoschalters. Bevorzugt sind unterschiedliche Auflageelemente für einen 24-V- und einen 12-V-Thermoschalter vorgesehen.

Gemäß einer bevorzugten Ausführungsform sind an mindestens einer Seitenfläche der Kommutatorbürstenschächte, vorzugsweise an sämtlichen Seitenflächen in Längsrichtung der Kommutatorbürstenschächte verlaufende Linienführungen für die Kommutatorbürsten vorgesehen. Im Gegensatz zu einer aus dem Stand der Technik bekannten vollflächigen Anlage der Kommutatorbürsten an den Seitenflächen der Kommutatorbürstenschächte kann durch die Linienführung ein Verkanten der Kommutatorbürsten innerhalb der Kommutatorbürstenschächte vermieden werden. Aufgrund der Linienführung der Kommutatorbürsten in dem Kommutatorbürstenschacht ist die lichte Weite des Kommutatorbürstenschachtes nicht mehr identisch mit dem Abstand zwischen den Seitenflächen des Kommutatorbürstenschachtes. In dem Bereich zwischen Kommutatorbürsten und Seitenflächen der Kommutatorbürstenschächte können Erhabenheiten, beispielsweise eine Spritzhaut oder ein Grat ohne Beeinträchtigung der Funktion vorhanden sein.

### Kurze Beschreibung der Zeichnungen

Weitere Vorteile und zweckmäßige Ausführungsformen sind den weiteren Ansprüchen, der Figurenbeschreibung und den Zeichnungen zu entnehmen. Es zeigen:
- Fig. 1: eine schematische Darstellung der Anordnung eines Kunststoffelementes in einem elektrischen Fensterhebeantrieb,
- Fig. 2: das Kunststoffelement in einer Ansicht von unten,
- Fig. 3: das Kunststoffelement in einer Seitenansicht,
- Fig. 4: das Kunststoffelement in einer Draufsicht,
- Fig. 5: eine Vergrößerung des Details B aus Fig. 3,
- Fig. 6: eine geschnittene Darstellung des Kunststoffelements entlang der Schnittlinie A-A gemäß Fig. 3 und
- Fig. 7: eine geschnittene Darstellung des Kunststoffelements entlang der Schnittlinie C-C gemäß Fig. 4.

### Ausführungsformen der Erfindung

In den Figuren sind gleiche Bauteile und Bauteile mit gleicher Funktion mit den gleichen Bezugszeichen gekennzeichnet.

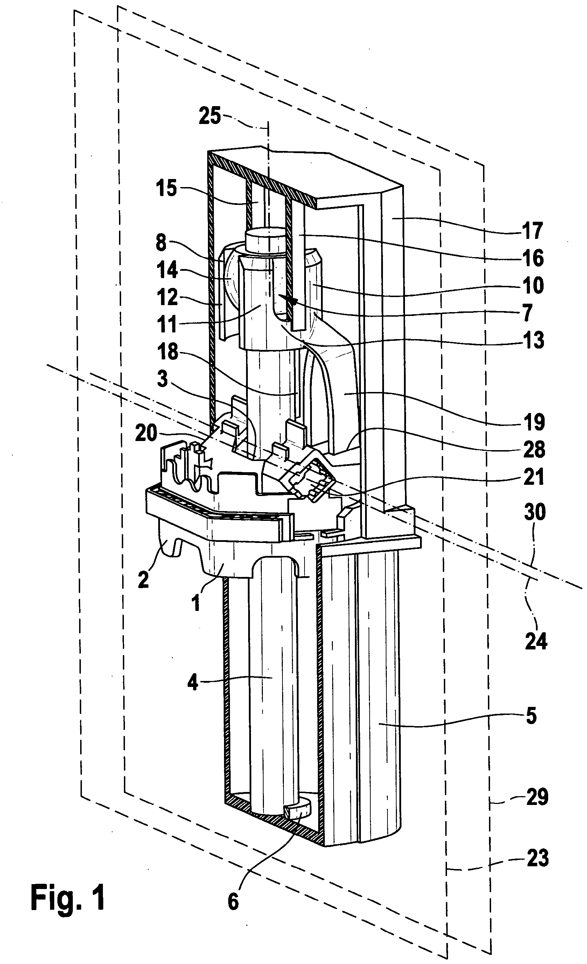

In Fig. 1 ist ein einstückiges, als Spritzgussteil ausgebildetes Kunststoffelement 1 mit einer Grundplatte 2 mit einem Wellendurchgangskanal 3 gezeigt. Durch den Wellendurchgangskanal 3 hindurch ist eine Antriebswelle 4. geführt. Bei der Antriebswelle 4 handelt es sich um die Rotorwelle eines nicht gezeigten Gleichstromelektromotors, der in einem Statorgehäuse 5 aufgenommen ist. Mittels eines Sinterlagers 6 ist die Antriebswelle 4 im Statorgehäuse in radialer Richtung gelagert und kann ebenso axial gelagert werden.

Mit Abstand zu der Grundplatte 2 weist das einteilige Kunststoffelement 1 einen Lagersitz 7, bestehend aus vier Armen 8, 9, 10, 11, auf, welche die parallelen Schenkel zweier U-förmigen Elemente 12, 13 bilden. Die Arme 8, 9, 10, 11 dienen zur klemmenden Aufnahme eines als Kalottenlager ausgebildeten Wellenlagers 14 zur radialen Lagerung der Antriebswelle 4. Mithilfe zweier Streben 15, 16 eines Getriebegehäuses 17 wird das Wellenlager 14 in dem Lagersitz 7 gesichert.

Wie sich aus Fig. 1 ergibt, ist die Grundplatte 2 zwischen Statorgehäuse 5 und Getriebegehäuse 17 verspannt.

Der Verlauf der Antriebswelle 4 in dem Bereich hinter dem Wellenlager 14 in dem nur ausschnittsweise dargestellten Getriebegehäuse 17 ist nicht gezeigt. Beispielsweise ist die Antriebswelle 4 drehfest mit einer Schnecke verbunden, die in Eingriff mit einem in dem Getriebegehäuse 17 drehbar gelagerten Schneckenrad steht. An dem in Fig. 1 dargestellten unteren Ende der Antriebswelle 4 gegenüberliegenden Ende kann die Antriebswelle 4 im Getriebegehäuse 17 in axialer sowie radialer Richtung gelagert werden.

Die beiden U-förmigen Elemente 12, 13 sind über jeweils einen Stützarm 18, 19 mit der dem Lagersitz 7 zugewandten Oberseite der Grundplatte 2 verbunden.

Ferner weist die Grundplatte 2 zwei diametral gegenüberliegende Kommutatorbürstenschächte 20, 21 auf, die orthogonal auf den Wellendurchgangskanal 3 zulaufen. Diese dienen zur Aufnahme von Kommutatorbürsten, Stromwendebürsten bzw. Kohlebürsten. Die Bürsten haben die Funktion, die nicht dargestellten Ankerwicklungen des Gleichstromelektromotors zu bestromen und liegen zu diesem Zweck radial an einem nicht dargestellten, mit der Antriebswelle 4 verbundenen Kommutator in bekannter Weise an und sind unterschiedlich gepolt.

Wie sich aus Fig. 1 ergibt, sind die Stützarme 18, 19 mit seitlichem Abstand zu den Kommutatorbürstenschächten 20, 21 sowie leicht oberhalb einer die gemeinsame Längsmittelachse 24 der Kommutatorbürstenschächte 20, 21 aufnehmenden und parallel zur Oberseite der Grundplatte verlaufenden Ebene mit der Grundplatte 2 verbunden. Dieser Kontaktbereich 28 ist in der Zeichnungsebene hinter einer zu einer Mittelebene 23 parallelen, die äußere Längsachse 30 der Kommutatorbürstenschächte 20, 21 aufnehmenden Außenebene 29 angeordnet. Die gemeinsame Mittelebene 23 wird aufgespannt von der den Kommutatorbürstenschächten 20, 21 gemeinsamen Längsmittelachse 24 und der Drehachse der Welle, d.h. der Längsmittelachse 25 des Wellendurchgangskanals 3. Die Stützarme 18, 19 verlaufen im Wesentlichen parallel zu der Mittelebene 23 und halten die U-förmigen Elemente 12, 13 in einem unteren Eckbereich. Die Anordnung der Stützarme 18, 19 in Bezug auf die Mittelebene 23 ist asymmetrisch. Sämtliche Stützarme 18, 19 befinden sich auf einer gemeinsamen Seite der Mittelebene 23. Die Mittelebene 23 verläuft exakt durch die Mitte von zwei sich gegenüberliegenden Armen 8, 9 bzw. 10, 11 der U-förmigen Elemente 12, 13.

Es ist auch denkbar, dass die Kommutatorbürstenschächte unter einem Winkel zueinander angeordnet sind, so dass auch die jeweiligen Längsmittelachsen winklig zueinander verlaufen. In diesem Fall ergeben sich zwei Mittelebenen, die sich bevorzugt, jedoch nicht zwangsweise, in der Längsmittelachse 25 des Wellendurchgangskanals 23 schneiden. Erfindungsgemäß sind die Stützarme 18, 19 mit seitlichem Abstand zu diesen Mittelebenen sowie zu diesen Mittelebenen parallelen Außenebenen angeordnet.

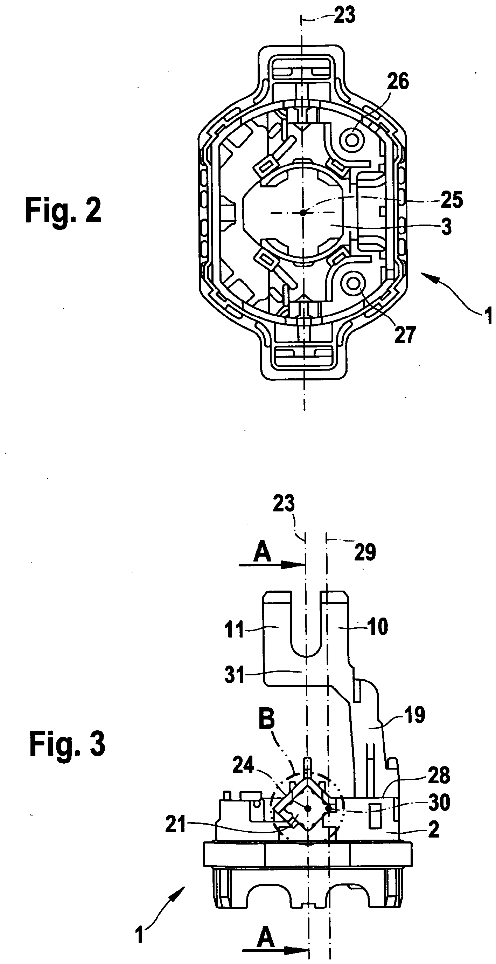

Aus den Fig. 2 bis 7 sind weitere Details des erfindungsgemäßen Kunststoffelements 1 ersichtlich. Fig. 2 zeigt das Kunststoffelement 1 aus einer Ansicht von unten. Eingezeichnet ist die Längsmittelachse 25 des Wellendurchgangskanals 3, welche senkrecht auf der Zeichnungsebene steht. Ferner ist die Mittelebene 23 angedeutet, welche ebenfalls senkrecht zur Zeichnungsebene verläuft. In der Ansicht gemäß Fig. 2 sind zwei Federdome 26, 27 zu erkennen. Diese dienen zur Aufnahme von nicht dargestellten Schenkelfedern, mit denen die Kommutatorbürsten in Richtung Längsmittelachse 25 federkraftbeaufschlagt werden.

In Fig. 3 ist das Kunststoffelement 1 in einer Seitenansicht dargestellt. Zu erkennen ist der Kontaktbereich 28 zwischen dem Stützarm 19 und der Grundplatte 2. Der gesamte Kontaktbereich 28 befindet sich mit seitlichem Abstand zu den Kommutatorbürstenschächten 20,21. Anders ausgedrückt befindet sich der Kontaktbereich 28 mit Abstand zu der Mittelebene 23 und auch außerhalb und mit Abstand zu der Außenebene 29. Die Außenebene 29 verläuft parallel zu der Mittelebene 23 und schneidet die Kommutatorbürstenschächte in ihrem seitlich äußersten Bereich, beinhaltet also die äußere Längsachse 30 der Kommutatorbürstenschächte 20, 21. Für den Fall, dass die Kommutatorbürstenschächte keine gemeinsame Längsmittelachse 24, sondern unter einem Winkel zueinander angeordnete Längsmittelachsen aufweisen, sind auch die Außenebenen winklig zueinander angeordnet. Erfindungsgemäß münden dann die Stützarme 18, 19 seitlich versetzt zu diesen Außenebenen in die Grundplatte 2.

Die von den Stützarmen 18, 19 getragenen Arme 8, 9, 10, 11 bzw. die diese verbindenden Bodenschenkel 31, 32 werden von den Stützarmen 18, 19 abgestützt, derart, dass der Bereich zwischen den Kommutatorbürstenschächten 20, 21 und den U-förmigen Elementen 12, 13 frei ist von Bauteilen bzw. Elementen des Kunststoffelementes 1. Hier können beispielsweise Elektronikbauteile untergebracht werden.

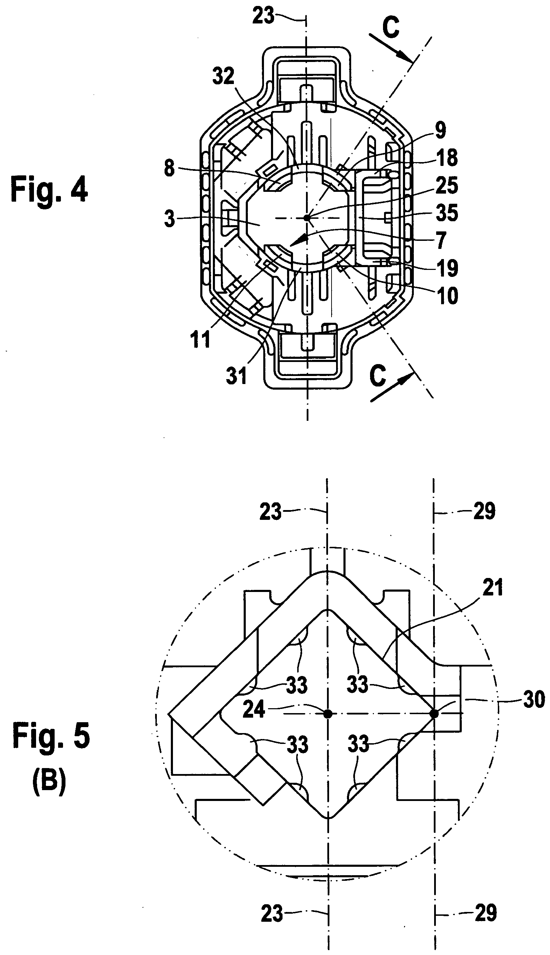

Wie aus Fig. 3 und Fig. 5 zu erkennen ist, ist die Querschnittsfläche der Kommutatorbürstenschächte im Wesentlichen quadratisch ausgeformt und derart angeordnet, dass sämtliche Seitenwände der Kommutatorbürstenkanäle 20, 21 unter einem Winkel von 45° zur senkrecht zur Oberseite der Grundplatte verlaufenden Mittelebene 23 angeordnet sind.

In Fig. 4 ist das Kunststoffelement 1 in einer Draufsicht dargestellt. Zu erkennen ist die senkrecht auf der Zeichnungsebene stehende Längsmittelachse 25 des Wellendurchgangskanals 3 sowie die Mittelebene 23. Die Arme 8, 11 befinden sich in der Zeichnungsebene links von der Mittelebene 23. Die beiden anderen Arme 9, 10 rechts von der Mittelebene. Daneben ist in Fig. 4 eine Verbindungsbrücke 35 zwischen den Stützarmen 18, 19 gezeigt. Zu erkennen ist weiterhin der L-förmige Querschnitt der Stützarme 18, 19 mit jeweils einem parallel zur Mittelebene 23 verlaufenden Schenkel sowie einem senkrecht zur Mittelebene 23 verlaufenden, von den Kommutatorbürstenschächten 20,21 weg weisenden Schenkel. Die Stützarme 18, 19 bilden in der in Fig. 4 dargestellten Draufsicht eine Art U-förmiges Element, das sich zur Aufnahme von Thermoschaltern eignet. Dabei können größere 24-V-Thermoschalter sowie kleinere 12-V-Thermoschalter von oben in Richtung Grundplatte 2 eingeschoben werden.

In Fig. 5 ist das Detail B aus Fig. 3 dargestellt. Zu erkennen ist der Kommutatorbürstenschacht 21 mit seinen vier im 45°-Winkel zur Mittelebene 23 angeordneten Seitenwänden. Auf jeder Seitenwand befinden sich zwei parallele in Längsrichtung, d.h. in Richtung Längsmittelachse 24 verlaufende Linienführungen 33 zur Führung der Kommutatorbürste. Durch die Linienführungen wird ein Verklemmen der Kommutatorbürste im Kommutatorbürstenschacht 21 vermieden.

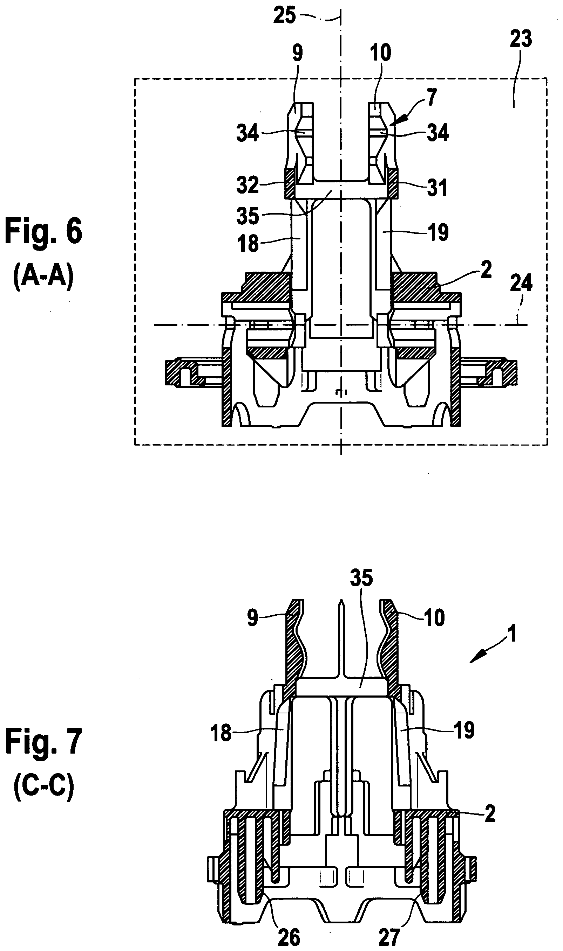

In Fig. 6 ist eine Schnittdarstellung des Kunststoffelements 1 entlang der Schnittlinie A-A gemäß Fig. 3 dargestellt. Die Schnittebene entspricht der Mittelebene 23. Zu erkennen sind Ausnehmungen 34 im Mittelbereich der Arme 9, 10 zur Aufnahme des Kalottenlagers 14 (siehe Fig. 1).

In Fig. 6 ist die mit Abstand zu der Oberseite der Grundplatte 2 verlaufende Verbindungsbrücke 35 zwischen den Stützarmen 18, 19 zu erkennen, die im Wesentlichen parallel zu der Längsmittelachse 24 verläuft. Das Vorsehen dieser Verbindungsbrücke 35 erhöht die Stabilität der Lagersitzanordnung.

In Fig. 7 ist eine Schnittdarstellung des Kunststoffelements 1 entlang der Schnittlinie C-C gemäß Fig. 4 gezeigt. Deutlich zu erkennen ist die Verbindungsbrücke 35 zwischen den Stützarmen 18, 19.

## Patentansprüche

1. Kunststoffelement mit einer Grundplatte (2), mit mindestens zwei auf einen durch die Grundplatte (2) verlaufenden Wellendurchgangskanal (3) zulaufenden Kommutatorbürstenschächten (20, 21) sowie mit einem über mindestens einen Stützarm (18, 19) mit der Grundplatte (2) verbundenen Lagersitz (7) zur Aufnahme eines Wellenlagers (14),
wobei der gesamte Kontaktbereich (28) des Stützarms (18, 19) mit der Grundplatte (2) mit seitlichem Abstand zu den Kommutatorbürstenschächten (20, 21) angeordnet ist,
**dadurch gekennzeichnet,**
**dass** die Kommutatorbürstenschächte (20, 21) einen quadratischen Querschnitt aufweisen, und sämtliche Seitenwände der Kommutatorbürstenschächte (20, 21) unter einem Winkel von 45° zu einer oder zwei senkrecht zur Oberseite der Grundplatte (2) verlaufenden Mittelebenen (23) angeordnet sind, wobei die eine oder zwei Mittelebenen (23) von der mindestens einen Längsmittelachse (24) der Kommutatorbürstenschächte (20, 21) und der Längsmittelachse (25) des Wellendurchgangskanals (3) aufgespannt werden.

2. Kunststoffelement nach Anspruch 1,
**dadurch gekennzeichnet,**
**dass** sich die Kommutatorbürstenschächte (20, 21) diametral gegenüberliegen und eine gemeinsame Längsmittelachse (24) aufweisen.

3. Kunststoffelement nach einem der Ansprüche 1 oder 2,
**dadurch gekennzeichnet,**
**dass** der Lagersitz (4) vier biegeelastische Arme (8, 9, 10, 11) zur klemmenden Aufnahme des Wellenlagers (14) aufweist.

4. Kunststoffelement nach Anspruch 3,
**dadurch gekennzeichnet,**
**dass** jeweils zwei Arme (8, 9; 10, 11) die, vorzugsweise parallelen, Schenkel eines U-förmigen Elements (12, 13) bilden.

5. Kunststoffelement nach Anspruch 4,
**dadurch gekennzeichnet,**
**dass** jedem U-förmigen Element (12, 13) ein Stützarm (18, 19) zugeordnet ist, und dass die beiden Stützarme (18, 19) zueinander, vorzugsweise in Längsrichtung der Kommutatorbürstenschächte (20, 21), beabstandet angeordnet sind.

6. Kunststoffelement nach Anspruch 5,
**dadurch gekennzeichnet,**
**dass** die beiden Stützarme (18, 19) über eine, vorzugsweise parallel zu der Längsmittelachse (24) mindestens eines der Kommutatorbürstenschächte (20, 21) verlaufenden, Verbindungsbrücke (35) miteinander verbunden sind.

7. Kunststoffelement nach einem der Ansprüche **3 bis 6**, **dadurch gekennzeichnet, dass** im Mittelbereich der Arme (9, 10) Ausnehmungen (34) zur Aufnahme des Kalottenlagers (14) ausgebildet sind.

8. Kunststoffelement nach einem der vorhergehenden Ansprüche,
**dadurch gekennzeichnet,**
**dass** die Grundplatte (2), der Stützarm (18, 19) und der Lagersitz (7) einstückig, insbesondere als Spritzgussteil, ausgebildet sind.

9. Kunststoffelement nach einem der vorhergehenden Ansprüche,
**dadurch gekennzeichnet,**
**dass** Linienführungen zur Führung von Kommutatorbürsten innerhalb der Kommutatorbürstenschächte (20, 21) vorgesehen sind.

## Claims

1. Plastic element comprising a base plate (2), comprising at least two commutator brush boxes (20, 21) which run towards a shaft passage channel (3) which runs through the base plate (2), and comprising a bearing seat (7), which is connected to the base plate (2) by means of at least one supporting arm (18, 19), for accommodating a shaft bearing (14),
wherein the total contact region (28) of the supporting arm (18, 19) with the base plate (2) is arranged at a lateral distance from the commutator brush boxes (20, 21),
**characterized**
**in that** the commutator brush boxes (20, 21) have a square cross section, and all of the side walls of the commutator brush boxes (20, 21) are arranged at an angle of 45° in relation to one or two centre planes (23) which run perpendicularly in relation to the top side of the base plate (2), wherein the one or two centre planes (23) are spanned by the at least one longitudinal centre axis (24) of the commutator brush boxes (20, 21) and the longitudinal centre axis (25) of the shaft passage channel (3).

2. Plastic element according to Claim 1, **characterized**
**in that** the commutator brush boxes (20, 21) are situated diametrically opposite and have a common longitudinal centre axis (24).

3. Plastic element according to either of Claims 1 and 2,
**characterized**
**in that** the bearing seat (4) has four flexurally elastic arms (8, 9, 10, 11) for accommodating the shaft bearing (14) in a clamping manner.

4. Plastic element according to Claim 3, **characterized**
**in that** in each case two arms (8, 9; 10, 11) form the, preferably parallel, limbs of a U-shaped element (12, 13).

5. Plastic element according to Claim 4, **characterized**
**in that** each U-shaped element (12, 13) has an associated supporting arm (18, 19), and in that the two supporting arms (18, 19) are arranged at a distance from one another, preferably in the longitudinal direction of the commutator brush boxes (20, 21).

6. Plastic element according to Claim 5, **characterized**
**in that** the two supporting arms (18, 19) are connected to one another by means of a connecting bridge (35) which preferably runs parallel to the longitudinal centre axis (24) of at least one of the commutator brush boxes (20, 21).

7. Plastic element according to one of Claims 3 to 6, **characterized**
**in that** recesses (34) for accommodating the spherical bearing (14) are formed in the centre region of the arms (9, 10).

8. Plastic element according to one of the preceding claims,
**characterized**
**in that** the base plate (2), the supporting arm (18, 19) and the bearing seat (7) are integrally formed, in particular as an injection-moulded part.

9. Plastic element according to one of the preceding claims,
**characterized**
**in that** line guides for guiding commutator brushes within the commutator brush boxes (20, 21) are provided.

## Revendications

1. Élément en matière plastique comprenant une plaque de base (2), comprenant au moins deux compartiments à balai de collecteur (20, 21) qui arrivent sur un canal de passage d'arbre (3) qui s'étend à travers la plaque de base (2) et comprenant aussi un siège de palier (7) destiné à accueillir un palier d'arbre (14) et relié à la plaque de base (2) par le biais d'au moins un bras d'appui (18, 19), l'ensemble de la zone de contact (28) du bras d'appui (18, 19) avec la plaque de base (2) étant disposé avec un écart latéral par rapport aux compartiments à balai de collecteur (20, 21),
**caractérisé en ce**
**que** les compartiments à balai de collecteur (20, 21) possèdent une section transversale carrée et toutes les parois latérales des compartiments à balai de collecteur (20, 21) sont disposées sous un angle de 45° par rapport à un ou deux plans centraux (23) qui s'étendent perpendiculairement au côté supérieur de la plaque de base (2), l'un ou les deux plans centraux (23) étant tracés par l'au moins un axe central longitudinal (24) des compartiments à balai de collecteur (20, 21) et l'axe central longitudinal (25) du canal de passage d'arbre (3).

2. Élément en matière plastique selon la revendication 1, **caractérisé en ce que** les compartiments à balai de collecteur (20, 21) sont diamétralement opposés et possèdent un axe central longitudinal (24) commun.

3. Élément en matière plastique selon l'une des revendications 1 ou 2, **caractérisé en ce que** le siège de palier (4) possède quatre bras élastiques flexibles (8, 9, 10, 11) servant à l'accueil avec serrage du palier d'arbre (14).

4. Élément en matière plastique selon la revendication 3, **caractérisé en ce que** deux bras (8, 9 ; 10, 11) respectifs forment les branches, de préférence parallèles, d'un élément en forme de U (12, 13).

5. Élément en matière plastique selon la revendication 4, **caractérisé en ce qu'**un bras d'appui (18, 19) est associé à chaque élément en forme de U (12, 13), et **en ce que** les deux bras d'appui (18, 19) sont disposés espacés l'un de l'autre, de préférence dans le sens longitudinal des compartiments à balai de collecteur (20, 21).

6. Élément en matière plastique selon la revendication 5, **caractérisé en ce que** les deux bras d'appui (18, 19) sont reliés l'un à l'autre par le biais d'un cavalier de liaison (35), de préférence parallèlement à l'axe central longitudinal (24) d'au moins l'un des compartiments à balai de collecteur (20, 21).

7. Élément en matière plastique selon l'une des revendications 3 à 6, **caractérisé en ce que** des cavités (34) destinées à accueillir le palier en forme de calotte (14) sont formées dans la zone centrale des bras (9, 10).

8. Élément en matière plastique selon l'une des revendications précédentes, **caractérisé en ce que** la plaque de base (2), le bras d'appui (18, 19) et le siège de palier (7) sont réalisés d'un seul tenant, en particulier sous la forme d'une pièce moulée par injection.

9. Élément en matière plastique selon l'une des revendications précédentes, **caractérisé en ce que** des guides linéaires servant à guider les balais de collecteur se trouvent à l'intérieur des compartiments à balai de collecteur (20, 21).
